# EUROPÄISCHE PATENTANMELDUNG

(11) **EP 2 157 676 A2**
(43) Veröffentlichungstag der Anmeldung: **24.02.2010**
(21) Anmeldenummer: 09010530.5
(22) Anmeldetag: 17.08.2009
(51) Int. Cl.: H02J 3/44, H02J 5/00

(54) **Verfahren und Einrichtung zur Aufschaltung einer Photovoltaikanlage an ein Versorgungsnetz**

(30) Priorität: 20.08.2008 DE 102008038542
(71) Anmelder: Adensis GmbH, 01099 Dresden (DE)
(72) Erfinder: Beck, Bernhard, 97332 Volkach (DE); Neussner, Thomas, 97447 Gerolzhofen (DE); Wenzlik, Constantin, 97082 Würzburg (DE)

(57) **Zusammenfassung**

Es werden eine Einrichtung und ein Verfahren zur Vorbereitung der Aufschaltung einer Photovoltaik-Anlage (Q1) als erste Energiequelle mittels eines Motor-Generator-Satzes (5, 6, 7) an ein Strom-Versorgungsnetz (13) vorgestellt. Hierbei ist der Gleichstrom-Motor (5) über eine Welle (6) mit einem Drehstrom-Generator (7) verbunden, wobei der Drehstrom-Generator (7) an das Strom-Versorgungsnetz (13) anschließbar ist. Es hat sich gezeigt, dass eine Aufschaltung einer solchen Einrichtung bei geringer und schwankender Leistung der Photovoltaik-Anlage (Q1) schwierig und zeitintensiv ist. Um ein sauberes und zügiges Aufschalten zu ermöglichen, ist vorgesehen, dass der Gleichstrom-Motor (5) von einer zweiten Gleichstromquelle (Q2) mit elektrischem Gleichstrom versorgt wird, dass der Betrieb des Drehstrom-Generators (7) mit Hilfe der zweiten Gleichstromquelle (Q2) an die Verhältnisse im Strom-Versorgungsnetz (13) angepasst wird, und dass erst nach der erfolgten Anpassung die Photovoltaik-Anlage (Q1) mit dem Gleichstrom-Motor (5) verbunden und die zweite Gleichstromquelle (Q2) von dem Gleichstrom-Motor (5) getrennt wird. Auf diese Weise ist ein schnelles und präzises Aufschalten der Photovoltaik-Anlage (Q1) mittels des Drehstrom-Generators (7) an das Stromnetz (13) mit definierten Parametern möglich.

## Beschreibung

Die Erfindung betrifft ein Verfahren zur Vorbereitung der Netzsynchronisation eines Motor-Generator-Satzes, bei dem ein Gleichstrom-Motor über eine Welle mit einem Drehstrom-Generator verbunden ist, mit einer Photovoltaik-Anlage als Primärenergiequelle für den Gleichstrom-Motor, wobei der Drehstrom-Generator an ein Strom-Versorgungsnetz anschließbar ist. Die Erfindung bezieht sich ebenfalls auf eine Vorrichtung zur Durchführung des Verfahrens.

Ein solches Verfahren ist geeignet, den bei einer großen Anlage vom Wechselstrom-Generator erzeugten Wechselstrom oder Drehstrom in das Strom-Versorgungsnetz, vorzugsweise in ein öffentliches Netz, einzuspeisen.

Es sind Photovoltaik-Anlagen bekannt, bei denen der von den Photovoltaik-Modulen insgesamt gelieferte Gleichstrom mittels eines elektrischen Umformers oder Wechselrichters in Wechselstrom oder Drehstrom umgewandelt wird, der dann in das Strom-Versorgungsnetz eingespeist wird. Zur Zeit werden auf dem Markt für Großanlagen elektrische Wechselrichter angeboten, die Halbleiter-Bauelemente enthalten und die für eine Leistung von bis zu 700 kW ausgelegt sind. Sie sind natürlich entsprechend teuer. Für eine Anlage größerer Leistung müssen mehrere elektrische Wechselrichter bereitgestellt werden. Beispielsweise werden heutzutage für eine Solar-Anlage einer Leistung von 2,5 MW mindestens 9 derartige elektrische Wechselrichter eingesetzt, von denen jeder für eine Leistung von 330 kW ausgelegt ist.

Wenngleich ein elektrischer Wechselrichter eine hohe Effizienz bei der Energieumsetzung hat, so ist doch zu verzeichnen, dass er aufgrund der in ihm enthaltenen Kondensatoren mit ziemlich großer elektrischer Kapazität relativ träge reagiert. Derzeit müssen zwischen 20 Sekunden und 3 Minuten angesetzt werden, bis ein solcher Wechselrichter an eine Änderung der momentan vorliegenden Sonnenenergie-Einstrahlung mittels seiner Regelungseinrichtung angepasst werden kann.

In der DE 10 2006 026073 ist bereits vorgeschlagen worden, einen Gleichstrom-Motor in Kombination mit einem von einer gemeinsamen Welle angetriebenen Wechselstrom-Generator (Motor-Generator-Satz) einzusetzen. GleichstromMotoren und Wechselstrom-Generatoren für solch hohe Leistungen sind auf dem Markt verfügbar. Ein großer Vorteil einer solchen Kombination gegenüber einer Mehrzahl von elektrischen Wechselrichtern liegt darin, dass sie infolge der geringen Anzahl an Komponenten weniger von statistischen Ausfällen betroffen ist. Ein weiterer Vorteil liegt darin, dass weniger Wartungseinsätze erforderlich sind. Und vorteilhaft ist auch, dass im Betrieb nur eine einzige Einheit überwacht werden muss und dass die Lebensdauer eines elektro-mechanischen Antriebssatzes bei fachgerechter Pflege ein Vielfaches der Lebensdauer von elektronischen Elementen betragen kann.

Aus der DE 20 2006 002 726 U1, von der die Erfindung ausgeht, ist ein Motor-Generator-Satz zum Betreiben an einer Solaranlage bekannt. Diese Schrift befasst sich jedoch lediglich mit der Mechanik des Motor-Generator-Satzes. Sie sieht auf einer Welle mehrere Polräder vor, die jeweils in einem eigenen Ständer laufen.

Beim Betreiben einer solchen gattungsgemäßen Anlage mit dem zugeordneten Verfahren hat es sich als kompliziert herausgestellt, eine saubere, reibungslose Anpassung der Ausgangsparameter des Drehstrom-Generators an das Netz zu realisieren, damit der Drehstrom-Generator dem Strom-Versorgungsnetz aufgeschaltet werden kann. Dieses wird dem Umstand zugeschrieben, dass sich die zugehörigen Regel- und Steuergrößen laufend mit dem Lichteinfall ändern. Bei solch "zappeligen" Eingangsgrößen kann es zum Teil eine erhebliche Zeitspanne dauern, bis ein akzeptabler Schaltmoment erreicht ist, bei dem die auftretenden unerwünschten Ausgleichsströme gerade noch toleriert werden können. Solche Ausgleichsströme führen zu einer Überbeanspruchung und damit zu einem unnötigen Altern der beteiligten Komponenten. Außerdem ist es nachteilig, dass während der Anpassungsdauer, d. h. bis zum Erreichen der Zuschaltbedingungen, keine Lieferung von erzeugter Solarenergie in das Versorgungsnetz erfolgen kann.

Der Erfindung liegt daher die Aufgabe zugrunde, das oben genannte Verfahren so weiterzubilden, dass ein schnelles und exaktes Erreichen der Zuschaltbedingungen, i.e. der Netzfrequenz und der Phasenlage, erreicht werden, wobei nur geringe Ausgleichsströme entstehen. Weiterhin liegt ihr die Aufgabe zugrunde, eine Einrichtung zur Durchführung des Verfahrens anzugeben.

Diese Aufgabe wird bezüglich des Verfahrens dadurch gelöst, dass
- dass zunächst die Photovoltaik-Anlage getrennt vom Gleichstrom-Motor und dass zunächst auch der Drehstrom-Generator getrennt vom Strom-Versorgungsnetz ist,
- dass der Generator-Satz, insbesondere der Gleichstrom-Motor, von einer zweiten Energiequelle mit Energie versorgt wird,
- dass die Drehzahl und die Phasenlage des Drehstrom-Generators mit Hilfe der zweiten Energiequelle an die Verhältnisse im Strom-Versorgungsnetz ange-passt werden, und
- dass nach der erfolgten Anpassung die Photovoltaik-Anlage mit dem Gleichstrom- Motor verbunden und die zweite Energiequelle von dem Gleichstrom-Motor getrennt wird.

Die erfindungsgemäße Einrichtung zeichnet sich durch
a) eine Photovoltaik-Anlage mit einer Vielzahl von Photovoltaik-Modulen,
b) einen an die Photovoltaik-Anlage anschließbaren Gleichstrom-Motor, der von der Photovoltaik-Anlage mit einer Gleichspannung und einem Gleichstrom gespeist ist,
c) einen Drehstrom-Generator, der über eine Welle mit dem Gleichstrom-Motor verbunden und zur Zuleitung der von ihm erzeugten Wechselspannung an ein Strom-Versorgungsnetz anschließbar ist,
d) eine zweite Energiequelle, die an den Gleichstrom-Motor anschließbar ist,
e) eine Regel- und Steuereinheit, die den Antrieb des Gleichstrom-Motors mittels der zweiten Energiequelle regelt, bis die Netzfrequenz und die Phasenlage des Strom-Versorgungsnetzes am Ausgang des Drehstrom-Generators anliegen,
f) einen Schalter, mit dessen Hilfe die zweite Energiequelle von dem Gleichstrom-Motor trennbar ist, und
g) einen Schalter, mit dessen Hilfe der Ausgang des Drehstrom-Generators an das Strom-Versorgungsnetz anschließbar ist,
aus.

Das Verfahren und die Einrichtung lassen sich mit Vorteil bei größeren Anlagen einsetzen.

Bevorzugt wird als sekundäre Antriebsquelle für den Gleichstrom-Motor, und zwar unabhängig von der Photovoltaik-Anlage, bevorzugt eine Gleichstromquelle genutzt. Dadurch werden die von den Photovoltaik-Modulen erzeugten Spannungs- und Strom-Schwankungen von dem Gleichstrom-Motor ferngehalten. Es wird ein Anfahren des Maschinensatzes (Gleichstrom-Motor/Drehstrom-Generator) unter definierten Bedingungen ermöglicht. Eine unvorhergesehene Änderung von Parametern, wie sie bei einem Anfahren des Maschinensatzes mittels der Photovoltaik-Anlage, z.B. durch eine Abschattung wegen einer durchziehenden Wolke oder der Abdeckung eines Moduls durch verwehtes Laub, vorkommt, kann sicher verhindert werden.

In vorliegender Erfindung wird die Photovoltaik-Anlage als primäre oder erste Energie- oder Gleichstromquelle angesehen. Die zweite oder sekundäre Energiequelle kann jede andere Energiequelle sein, unabhängig davon, ob es sich um eine Energie speichernde Quelle oder eine Energie erzeugende Quelle handelt. So z.B. kann eine Akkumulatorbank eingesetzt werden, die bei nicht in das Versorgungs-Netz einspeisbarer Überproduktion von der Photovoltaik-Anlage gespeist wird. Ebenso ist ein elektronischer oder elektrischer Gleichrichter einsetzbar. Bevorzugt ist jedoch eine Gleichstromquelle, welche aus dem Strom-Versorgungsnetz gespeist wird, da hierbei extrem stabile Arbeitsbedingungen herrschen und eine Synchronisation schnell und präzise durchgeführt werden kann.

Es ist sinnvoll, die zweite Gleichstromquelle über einen Schalter an die Eingangsklemmen des Gleichstrom-Motors zuschaltbar zu machen. Insbesondere wenn die zweite Gleichstromquelle aus dem Versorgungsnetz gespeist wird, ist es nicht sinnvoll, sie permanent zu eben einer Einspeisung in dieses Netz vorzusehen. Im Falle einer Kondensatorbank kann es sich anders verhalten, indem immer ein gut aufgeladener Zustand erreicht werden soll, zum einen, um den Verschleiß des Speichermediums zu minimieren, und zum anderen, falls die Anlage in einem Inselbetrieb eingesetzt wird, um eine Mindestleistung an das Versorgungsnetz bereithalten zu können. Im ersteren Fall sollte der Schalter als Schaltelement ausgelegt sein, das gleichzeitig mit dem Trennen der zweiten Gleichstromquelle vom Gleichstrom-Motor die Photovoltaik-Anlage als primäre Gleichstromquelle mit dem Gleichstrom-Motor verbindet.

Zwischen dem Drehstrom-Generator und dem Strom-Versorgungsnetz sollte ein weiteres Schaltelement vorgesehen ist, bei dessen Betätigung die zweite Energiequelle vom Strom-Versorgungsnetz genommen wird und zugleich der Drehstrom-Generator an das Strom-Versorgungsnetz angekoppelt wird. Dies ist für den standardmäßigen Betrieb sinnvoll.

Zur Dimensionierung der zweiten Gleichstromquelle ist anzumerken, dass ihre Leistung unterhalb von 20%, insbesondere unterhalb von 6%, der Nennleistung des Gleichstrom-Motors sein kann. Es ist lediglich eine Anpassung an die herrschenden Netzverhältnisse (Frequenz, Phase) vorzunehmen, was leichter fällt bei Einsatz einer nicht zu grob reagierenden zweiten Gleichstromquelle.

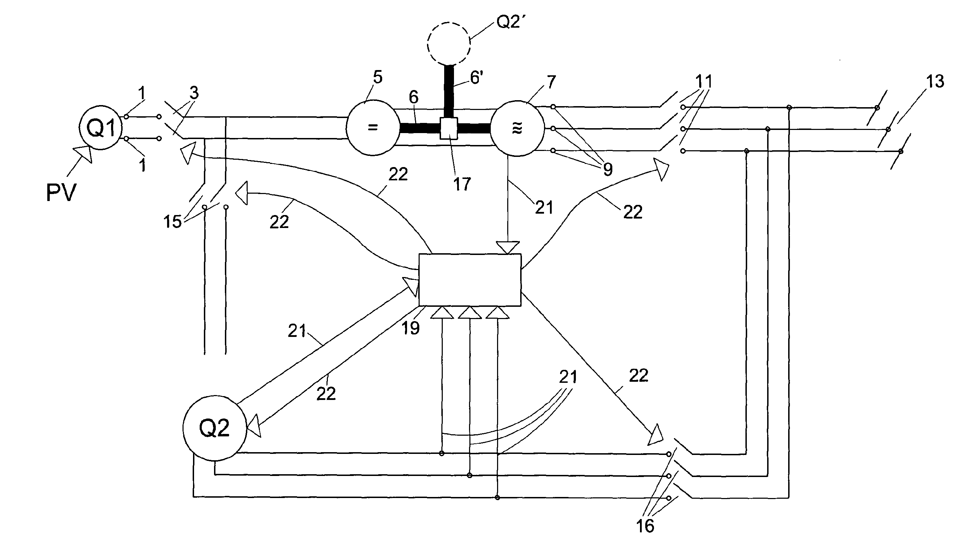

Ein Ausführungsbeispiel der Erfindung wird anhand der beigefügten Figur näher erläutert. Die Figur stellt eine schematische Darstellung einer Einrichtung zur Aufschaltung einer Photovoltaik-Anlage an ein Strom-Versorgungsnetz dar.

In der Figur ist mit Q1 oder PV eine Photovoltaik-Anlage bezeichnet, die eine Vielzahl von (nicht gezeigten) Photovoltaik-Modulen umfasst und eine hohe Leistung von mehr als 1 MW hat. Die Ausgangsklemmen 1 der Photovoltaik-Anlage Q1 sind zu einem ersten Schalter 3 geführt, dessen Ausgangsklemmen an den Eingang eines Gleichstrom-Motors 5 gelegt sind. Im stationären Betrieb treibt die Photovoltaik-Anlage Q1 den Gleichstrom-Motor 5 an, dessen Welle 6 mit einem Drehstrom-Generator 7 verbunden ist. Der Drehstrom-Generator 7 weist drei Ausgangsklemmen 9 auf, die zu einem zweiten Schalter 11 führen, über den der Drehstrom-Generator 7 an ein öffentliches Drehstrom-Versorgungs- oder - Verteilungsnetz 13 angeschlossen werden kann. Eine solche Anlage ist bis hierher Stand der Technik und braucht nicht weiter erläutert zu werden.

Es hat sich in der Praxis als schwierig erwiesen, die Photovoltaik-Anlage Q1 (in der Regel morgens) zu synchronisieren, da mangels ausreichender Sonneneinstrahlung u. U. erst eine relativ schwache Leistung zur Verfügung steht, die erheblichen Schwankungen unterworfen ist. Dieser Schwierigkeit wird vorliegend mittels einer zweiten Energiequelle Q2 begegnet. Diese ist im gezeigten Ausführungsbeispiel eine am Strom-Versorgungsnetz 13 anschließbare Gleichstromquelle. Ihre Gleichspannungs-Ausgangsklemmen sind mittels eines dritten Schalters 15 mit dem Eingang des Gleichstrom-Motors 5 verbindbar, wie es in der Figur mit ausgezogener Linie gezeigt ist. Der Anschluss an das Strom-Versorgungsnetz 13 erfolgt über einen weiteren Schalter 16.

Alternativ hierzu ist es möglich, als zweite Energiequelle Q2' einen weiteren Gleichstrom-Motor einzusetzen, dessen Welle 6' über eine Kupplung 17 mit der Welle 6 verbunden ist, die den Gleichstrom-Motor 5 mit dem Drehstrom-Generator 7 verbindet. Dies ist gestrichelt in der Figur gezeigt.

Eine Regel- und Steuereinheit 19 ist mit der zweiten Energiequelle Q2, dem Drehstrom-Generator 7 und dem Versorgungsnetz 13 über Datenleitungen 21 verbunden, um die erforderlichen Regel- und Sollgrößen zu erfassen, um somit die Frequenz und die Phasenlage des Drehstrom-Generators 7 an die des Netzes 13 durch Signale mit Hilfe der Energiequelle Q2 anzugleichen. Um die voranstehend erläuterten Schaltvorgänge an den Schaltelementen 3, 11, 15, 16 zu koordinieren und auszuführen, sind Steuerleitungen 22 vorgesehen.

### 14 Patentansprüche

### 1 Figur

### Bezugszeichenliste

- 1: Ausgangsklemmen von Q1
- 3: erster Schalter
- 5: Gleichstrom-Motor
- 6: Welle von 5
- 6': Welle von Q2'
- 7: Drehstrom-Generator
- 9: Ausgangsklemmen des Drehstrom-Generators 7
- 11: zweiter Schalter
- 13: Strom-Verteilungsnetz
- 15: dritter Schalter
- 16: weiterer Schalter
- 17: Kupplung
- 19: Regel- und Steuereinheit
- 21: Datenleitungen
- 22: Steuerleitungen
- Q1: erste Energiequelle, Photovoltaik-Anlage
- Q2: zweite Energiequelle
- Q2': zweite Energiequelle (alternativ)

## Patentansprüche

1. Verfahren zur Vorbereitung der Netzsynchronisation eines Motor-Generator-Satzes (5, 6, 7), bei dem ein Gleichstrom-Motor (5) über eine Welle (6) mit einem Drehstrom-Generator (7) verbunden ist, mit einer Photovoltaik-Anlage (Q1) als Primärenergiequelle für den Gleichstrom-Motor (5), wobei der Drehstrom-Generator (7) an ein Strom-Versorgungsnetz (13) anschließbar ist, **dadurch gekennzeichnet,**
- **dass** zunächst die Photovoltaik-Anlage (Q1) getrennt vom Gleichstrom-Motor (5) und dass zunächst auch der Drehstrom-Generator (7) getrennt vom Strom-Versorgungsnetz (13) ist,
- **dass** der Generator-Satz (5, 6, 7), insbesondere der Gleichstrom-Motor (5), von einer zweiten Energiequelle (Q2, Q2') mit Energie versorgt wird,
- **dass** die Drehzahl und die Phasenlage des Drehstrom-Generators (7) mit Hilfe der zweiten Energiequelle (Q2, Q2') an die Verhältnisse im Strom-Versorgungsnetz (13) angepasst werden, und
- **dass** nach der erfolgten Anpassung die Photovoltaik-Anlage (Q1) mit dem Gleichstrom-Motor (5) verbunden und die zweite Energiequelle (Q2, Q2') von dem Gleichstrom-Motor (5) getrennt wird.

2. Verfahren nach Anspruch 1, **dadurch gekennzeichnet, dass** nach der erfolgten Anpassung der Drehzahl und der Phasenlage des Drehstrom-Generators (7) dieser mit dem Strom-Versorgungsnetz (13) verbunden wird, bevorzugt bevor die zweite Energiequelle (Q2) von dem Motor-Generator-Satz (5, 6, 7) getrennt wird.

3. Verfahren nach Anspruch 1 oder 2, **dadurch gekennzeichnet, dass** die zweite Energiequelle (Q2) eine zweite Gleichstromquelle ist, die über einen Schalter (15) an die Eingangsklemmen des Gleichstrom-Motors (5) anschaltbar ist.

4. Verfahren nach Anspruch 3, **dadurch gekennzeichnet, dass** der Schalter ein Schaltelement (1, 15) ist, welches gleichzeitig mit dem Trennen der zweiten Gleichstromquelle (Q2) vom Gleichstrom-Motor (5) die Photovoltaik-Anlage (Q1) als primäre Gleichstromquelle mit dem Gleichstrom-Motor (5) verbindet.

5. Verfahren nach einem der Ansprüche 1 bis 4, **dadurch gekennzeichnet, dass** die zweite Energiequelle (Q2) aus dem Strom-Versorgungsnetz (13) gespeist wird.

6. Verfahren nach einem der Ansprüche 1 bis 4, **dadurch gekennzeichnet, dass** die zweite Energiequelle (Q2) ein elektrischer Energiespeicher ist.

7. Verfahren nach einem der Ansprüche 1 bis 6, **dadurch gekennzeichnet, dass** zwischen dem Drehstrom-Generator (7) und dem Strom-Versorgungsnetz (13) ein weiteres Schaltelement (11) vorgesehen ist, bei dessen Betätigung der Drehstrom-Generator (7) an das Strom-Versorgungsnetz (13) angekoppelt wird.

8. Verfahren nach einem der Ansprüche 1 bis 7, **dadurch gekennzeichnet, dass** bei Betätigung eines Schaltelements (16) die zweite Energiequelle (Q2) vom Strom-Versorgungsnetz (13) getrennt wird, bevorzugt bei Ankoppelung des Drehstrom-Generators (7) an das Strom-Versorgungsnetz (13) .

9. Verfahren nach einem der Ansprüche 1 bis 8, **dadurch gekennzeichnet, dass** die Leistung der zweiten Energiequelle (Q2, Q2') unterhalb von 20% der Nennleistung des Gleichstrom-Motors (5) liegt.

10. Verfahren nach einem der Ansprüche 1 bis 3, **dadurch gekennzeichnet, dass** die zweite Energiequelle (Q2) ein Motor ist, dessen Welle (6') an die Welle (6) des Motor-Generator-Satzes (5, 6, 7) angekoppelt ist und der bei Zuschaltung den Motor-Generator-Satz (5, 6, 7) antreibt.

11. Einrichtung zur Durchführung des Verfahrens nach einem der Ansprüche 1 bis 10, **gekennzeichnet durch**
a) eine Photovoltaik-Anlage (Q1) mit einer Vielzahl von Photovoltaik-Modulen,
b) einen an die Photovoltaik-Anlage (Q1) anschließbaren Gleichstrom-Motor (5), der von der Photovoltaik-Anlage (Q1) mit einer Gleichspannung und einem Gleichstrom gespeist ist,
c) einen Drehstrom-Generator (7), der über eine Welle (6) mit dem Gleichstrom-Motor (5) verbunden und zur Zuleitung der von ihm erzeugten Wechselspannung an ein Strom-Versorgungsnetz (13) anschließbar ist,
d) eine zweite Energiequelle (Q2), die an den Gleichstrom-Motor (5) anschließbar ist,
e) eine Regel- und Steuereinheit (19), die den Antrieb des Gleichstrom-Motors (5) mittels der zweiten Energiequelle (Q2) regelt, bis die Netzfrequenz und die Phasenlage des Strom-Versorgungsnetzes (13) am Ausgang (9) des Drehstrom-Generators (7) anliegen,
f) einen Schalter (15), mit dessen Hilfe die zweite Energiequelle (Q2) von dem Gleichstrom-Motor (5) trennbar ist, und
g) einen Schalter (11), mit dessen Hilfe der Ausgang des Drehstrom-Generators (7) an das Strom-Versorgungsnetz (13) anschließbar ist.

12. Einrichtung nach Anspruch 11, **dadurch gekennzeichnet, dass** die zweite Energiequelle (Q2) eine Stromquelle ist, die über einen Schalter (15) an den Gleichstrom-Motor (5) anschaltbar ist.

13. Einrichtung nach Anspruch 11 oder 12, **dadurch gekennzeichnet, dass** die zweite Energiequelle (Q2) ihre Energie aus dem Strom-Versorgungsnetz (13) bezieht, und zwar bevorzugt über ein Schaltelement (16).

14. Einrichtung nach einem der Ansprüche 11 bis 13, **dadurch gekennzeichnet, dass** zwischen dem Ausgang des Drehstrom-Generators (7) und dem Strom-Versorgungsnetz (13) ein Schalter (11) vorgesehen ist.
